Europäisches Patentamt

European Patent Office

Office européen des brevets

(11) Veröffentlichungsnummer: **0 292 440 B1**

(12) # EUROPÄISCHE PATENTSCHRIFT

(45) Veröffentlichungstag der Patentschrift:
09.10.91 Patentblatt 91/41

(51) Int. Cl.⁵: **B23H 7/08, B23H 1/00**

(21) Anmeldenummer: **88810321.5**

(22) Anmeldetag: **19.05.88**

(54) Verfahren zum elektroerosiven Schneiden.

(30) Priorität: 22.05.87 CH 2004/87

(43) Veröffentlichungstag der Anmeldung:
23.11.88 Patentblatt 88/47

(45) Bekanntmachung des Hinweises auf die
Patenterteilung:
09.10.91 Patentblatt 91/41

(84) Benannte Vertragsstaaten:
AT BE CH DE ES FR GB IT LI NL SE

(56) Entgegenhaltungen:
GB-A- 755 826
PATENT ABSTRACTS OF JAPAN, Band 9, Nr.
235 (M-415)[1958], 21. September 1985; &
JP-A-60 90 630 (FANUC K.K.) 21-05-1985

(73) Patentinhaber: RABIAN, Laszlo
Casard 35
CH-1023 Crissier (CH)

(72) Erfinder: RABIAN, Laszlo
Casard 35
CH-1023 Crissier (CH)

(74) Vertreter: Grieskamp, Johannes Peter
Patentanwaltsbüro Hannspeter Grieskamp Im
Baumgarten 7 Postfach
CH-8123 Ebmatingen (CH)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum elektroerosiven Schneiden gemäss Oberbegriff des Patentanspruchs 1.

Die Elektrode für das elektroerosive Schneiden ist bekanntlich ein dünner Draht von einem Durchmesser, der im Bereich von 0,02 mm-0,35 mm liegt. Während des Schneidprozesses wird der Draht von einer Vorratsrolle abgewickelt. In einer komplizierten Konstruktion, welche oberhalb und unterhalb des Werkstückes angeordnet ist, wird die Drahtelektrode umgelenkt und gespannt. Diese Zugkraft beträgt z.B. 16 Newton. Ferner sind in der Konstruktion Diamanten oder Saphire für das strikte Einhalten der Position der Drahtelektrode vorgesehen, welche besonders beim Konisch-Schneiden grosse Reibungen auf die Drahtelektrode bringen, so dass diese Drahtelektrode bis an ihre Zerreissspannung gebracht wird. Der Arbeitsstrom, der bis zu einigen Hundert Ampère pro Impuls bei Repetitionsfrequenzen bis zu 250 kHz liegt, wird über Schleifkontakte auf die dünne Drahtelektrode gebracht. Die Übergangsflächen für den Arbeitsstrom sind sehr klein. Wegen der Erwärmung durch den hohen Arbeitsstrom müssen die Flächen in dem Dielektrikum gekühlt werden, in welchem der eigentliche Erosionsprozess zwischen dem Werkstück und der Drahtelektrode stattfindet. Dies bringt den Nachteil, dass die Flächen für den Stromübergang ebenfalls der Elektroerosion unterworfen sind, was zu ihrer baldigen Zerstörung führt. Ferner vergrössern die Flächen für den Stromübergang die Reibung auf die Drahtelektrode. Die bekannte Drahtelektrode wird während des Erosionsprozesses durch folgende Kräfte im Arbeitsspalt nachteilig belastet : elektrostatische Kräfte, elektromagnetische Kräfte, Funkenentladungskräfte sowie mechanische Kräfte, welche durch die Strömung des Dielektrikums und durch die Gasblasen entstehen. Diese Kräfte im Arbeitsspalt erzeugen unerwünschte Schwingungen der Drahtelektrode, welche in der Grössenordnung der Eigenfrequenz der gespannten Drahtelektrode um ca. 1 kHz liegen. Hierdurch wird der Wirkungsgrad des Erosionsprozesses um das Zwei- bis Dreifache verschlechtert. Ein weiterer Nachteil liegt darin, dass bei der bekannten Drahtelektrode infolge der Funkenentladungen im Arbeitsspalt Material in unerwünschter Weise abgetragen wird (Elektrodenverschleiss). Hierdurch wird der Querschnitt der dünnen Drahtelektrode zusätzlich verringert. Dieser Nachteil kann nicht einmal durch eine höhere Transportgeschwindigkeit der Drahtelektrode behoben werden, da diese Geschwindigkeit stark eingeschränkt ist durch die Materialeigenschaften, z.B. E-Modul, der Drahtelektrode. Ausserdem wird die Drahtelektrode, welche schon durch die oben erwähnten Einwirkungen bis zu ihrer Reissgrenze belastet ist, durch unvorhergesehene Störungen des Erosionsprozesses, z.B. Kurzschlüsse und Lichtbogenentladungen, zerrissen.

Die Erfindung hat die Aufgabe, diese Nachteile der bekannten Drahtelektroden zu beseitigen und darüber hinaus sich flexibel an die jeweiligen Arbeitsvorgänge anzupassen.

Diese Aufgabe wird gelöst durch die Merkmale des kennzeichnenden Teiles des Patentanspruchs 1.

Ausführungsbeispiele der Erfindung werden anhand der Zeichnungen näher erläutert. Es zeigen :

Figur 1    eine Schnittdarstellung der gesamten Anlage mit einer ersten Ausführung einer Elektrodenerzeugungsvorrichtung ;

Figur 2    eine Schnittdarstellung der zweiten Ausführung einer Elektrodenerzeugungsvorrichtung.

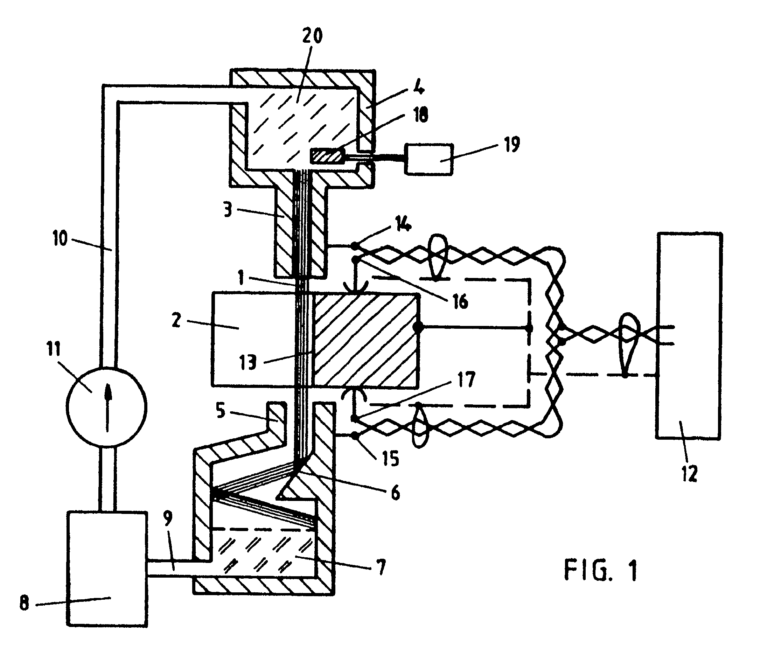

Die Figur 1 zeigt die Elektrode 1, welche aus der Düse 3 austritt und durch den Arbeitsspalt 13 des Werkstücks 2 in die Auffangvorrichtung 5 strömt. Die Düse 3 ist am Druckbehälter 4 angeschlossen, in welchem das flüssige bzw. pulverförmige Medium 20 sich befindet. Das Medium 20 kann Quecksilber- oder Graphitstaub oder flüssige Polymere sein. Diese Polymere werden auch konjugierte Polymere genannt, die bekanntlich eine sehr gute elektrische Leitfähigkeit besitzen. Das Medium 20 kann auch aus Verbindungen von Quecksilber mit diffundierenden Metallen, z.B. Kupfer, Chrom, Silber oder dergleichen bestehen. Das Medium 20 kann ausserdem aus Verbindungen von Quecksilber und sich auflösenden Metallen, z.B. Wolfram oder dergleichen bestehen. Das Medium 20 kann eine flüssige, pulverförmige, gelartige oder pastenartige Konsistenz beziehungsweise eine Kombination aus diesen Eigenschaften haben. Im vorliegenden Ausführungsbeispiel soll das Medium 20 aus Quecksilber bestehen. Dies Medium wird durch eine Pumpe 11 unter Druck in den Druckbehälter 4 gepumpt und kann durch die Düse 3 austreten, sofern die Schliessvorrichtung 18, 19 den Weg freigibt. Das Innere der Düse 3 ist so gestaltet, dass die aus dieser Düse austretende Strahlelektrode 1 den gewünschten Querschnitt hat. Der Querschnitt kann kreisförmig, elliptisch, dreieckförmig, quadratisch, rechteckig, polygon sein. Die Querschnittsform richtet sich nach den jeweiligen Anforderungen, welche beim erosiven Schneiden des Werkstücks 2 gestellt werden. Die Schliessvorrichtung besteht aus einem Betätigungsgerät 19, welches einen Schieber 18 bewegt, so dass die Öffnung zur Düse 3 geöffnet oder verschlossen werden kann. Der Strahl 1 tritt aus der Düse mit einer sehr hohen Geschwindigkeit aus, so dass er auf dem Wege durch den Arbeitsspalt 13 des Werkstücks 2 bis zur Auffangvorrichtung 5 seine Form behält und im Arbeitsspalt selbst von den dort herrschenden mechanischen und elektrischen Kräften nicht beeinflusst wird. Die Geschwindigkeit liegt ungefähr im Bereiche von 2 bis 20 m/sec. Diese Angabe gilt nur für Quecksilber. Bei den anderen Verbindungen des Mediums 20 liegt die Austrittsgeschwindigkeit des Strahls 1 höher, weil diese anderen Verbindungen ein kleineres spezifisches Gewicht besitzen. Die Austrittsgeschwindigkeit steht daher in einem bestimmten Verhältnis zum spezifischen Gewicht des jeweils verwendeten Mediums 20. Die Transportgeschwindigkeit der erfindungsgemässen Strahlelektrode 1 ist um das 100fache höher als diejenige der bekannten Drahtelektroden. Infolge dieser hohen Transportgeschwindigkeit der Strahlelektrode 1 ergibt sich ein besonderer Vorteil, welcher im folgenden näher erläutert wird. Bekanntlich wird die Spannung für die elektroerosive Bearbeitung an die Elektrode und an das Werkstück gelegt. Dies ist in der Figur 1 durch den Erosionsgenerator 12 dargestellt. Dieser Generator liefert die für den Erosionsprozess notwendigen Impulse, Spannung, Strom, Verhältnis Impulsdauer zu Pause usw. Da diese Dinge bekannt sind, wird hierzu nicht weiter Stellung genommen. Gemäss Figur 1 besteht die elektrische Verbindung zwischen dem Generator 12 und der Elektrode einerseits und dem Werkstück andererseits aus einem bifilaren koxialen Kabel. Der eine Pol des Kabels ist mit der Elektrode am Kontakt 14 angeschlossen. Der andere Pol des Kabels ist am Kontakt 16 des Werkstücks 2 angeschlossen. Ferner ist die Auffangvorrichtung 5 über den Kontakt 15 mit dem ersten Pol dieses Versorgungskabels verbunden. Infolge der extrem hohen Transportgeschwindigkeit der Strahlelektrode 1 durch den Arbeitsspalt 13 des Werkstücks 2 werden die Entladungskanäle der Funken zwischen den Oberflächen der Elektrode 1 und des Werkstücks 2 länger und erhalten einen kleineren Querschnitt. Wegen des kleineren Querschnittes wird die Entladungsenergie stärker konzentriert und kann daher aus der Oberfläche des Werkstücks 2 mehr Material herausschlagen.

Dadurch wird der Wirkungsgrad des elektroerosiven Schneidens verbessert, da die Materialabtragung grösser geworden ist als bei den bekannten Drahtelektroden.

Unterhalb des Werkstücks 2 ist die Auffangvorrichtung 5 angebracht, in welche der Hochgeschwindigkeitsstrahl 1 der erfindungsgemässen Elektrode strömt. Da dieser Strahl eine sehr hohe kinetische Energie besitzt, wird er durch die schräge Fläche 6 abgelenkt und sammelt sich im Reservoir 7, welches am Boden der Auffangvorrichtung 5 vorgesehen ist. In der Figur 1 ist nur eine schräge Fläche 6 dargestellt. Ohne weiteres können mehrere solcher Flächen vorgesehen werden, welche die hohe kinetische Energie vernichten. Es ist auch denkbar, dass für den gleichen Zweck eine oder mehrere schräge Kanäle vorgesehen sind. Das Quecksilber in dem Reservoir 7 wird über die Ausflussleitung 9 zu dem Aufbereitungsgerät 8 transportiert. In diesem Gerät kann ein bekannter Filter, z.B. ein Zentrifugalfilter oder ein Flüssigfilter vorgesehen sein, welcher aus dem Quecksilber die unerwünschten Partikel ausfiltert. Nach dieser Reinigung wird das Quecksilber über die Pumpe 11 wieder in den Druckbehälter 4 gepumpt. Wenn andere Arten des Mediums 20 verwendet werden, wie oben bereits erwähnt, kann in dem Aufbereitungsgerät 4 ein Zentrifugalfilter oder ein anderes Filter vorgesehen sein.

Es sei noch darauf hingewiesen, dass der Abstand zwischen dem Mundstück der Düse 3 und der Oberfläche des Werkstücks 2 je nach Bedarf vergrössert oder verkleinert werden kann.

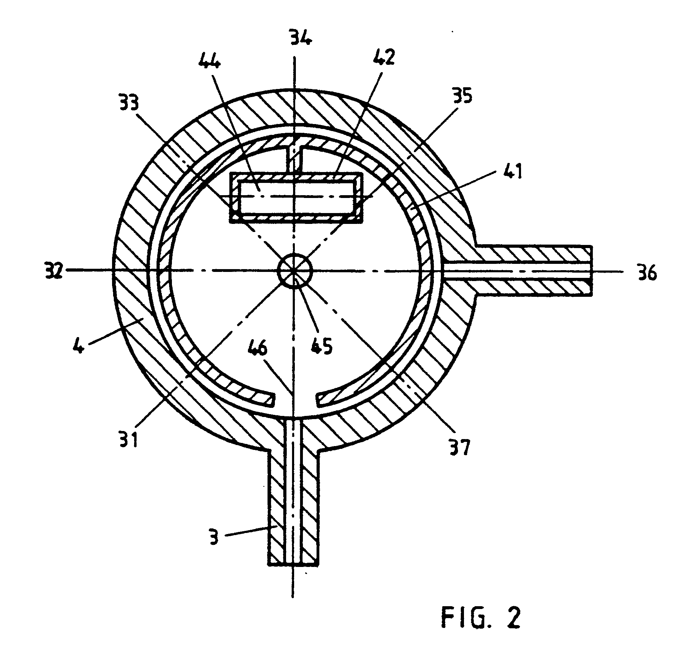

Figur 2 zeigt die zweite Ausführung, welche mehrere Düsen 3 an einem Druckbehälter 4 vorsieht. Es wurden nur zwei dieser Düsen gezeigt. In den angedeuteten Positionen 31, 32, 33, 34, 35 und 37 können die anderen Düsen vorgesehen sein. Der Druckbehälter 4 ist zylinderförmig ausgebildet und kann sich um seine Achse drehen. Die Zuleitung 45 ist über die Leitung 10 mit der Pumpe 11 verbunden. Die Innenwand des Vorratsbehälters 4 wird von einem Mantel 41 bedeckt, der aus elastischem Material besteht und eine schlitzförmige Öffnung 46 hat. Diese Oeffnung geht durch die gesamte Mantellänge. Gegenüber befindet sich ein Schwimmkörper 42, der mit dem Mantel 41 fest verbunden ist. In dem Schwimmkörper ist ein Hohlraum 44 vorgesehen. Die Aufgabe des Schwimmkörpers ist, im Medium 20 zu schwimmen und dafür zu sorgen, dass infolge seiner Auftriebskräfte der Schlitz 46 immer nach unten steht. Nur an dieser Stelle, wo der Schlitz 46 ist, kann eine Düse 3 mit dem Medium 20 versorgt werden. Die anderen Düsen sind verschlossen. Infolge des Drucks, den das Medium 20 auf den Mantel 41 ausübt, wird dieser an die zylinderförmige Innenfläche des Druckbehälters 4 angepresst, so dass die verschlossenen Düsen vollkommen abgeschlossen sind. Nur die Düse, welche nach unten zeigt, kann den Strahl 1 der Elektrode erzeugen und daher das elektroerosive Schneiden durchführen. Die untere Düse ist in Arbeitsposition. Die anderen Düsen sind in Ruheposition. Mit dem Ausführungsbeispiel der Figur 2 ist ein Mehrfachwerkzeug geschaffen worden. Jede der Düsen kann einen anderen Querschnitt, einen anderen Durchmesser haben. Je nach Anforderungen an den augenblicklichen Erosionsprozess kann die günstigste Düse in die Arbeitsposition gebracht werden. Dies wird dadurch bewerkstelligt, dass der Druck innerhalb des Vorratsbehälters 4 auf Null reduziert wird, so dass der Mantel 41 sich von der Innenfläche des Vorratsbehälters 4 lösen kann. Danach wird der zylinderförmige Vorratsbehälter 4 so lange verdreht, bis die Düse mit dem gewünschten Querschnitt und der gewünschten Form in die Arbeitsposition gekommen ist. Hiernach wird wieder der volle Druck auf den Vorratsbehälter gegeben. Die Düsen, welche in Ruheposition sind, werden durch den Mantel 41 wieder verschlossen.

Im Zusammenhang mit den Figuren 1 + 2 wird noch darauf hingewiesen, dass die Düsen 3 in Arbeitsstellung nicht immer senkrecht nach unten angeordnet sein müssen, und somit einen rechten Winkel zur Fläche des Werkstücks 2 bilden. Die Vorratsbehälter 4 der beiden Ausführungen können so verschwenkt werden, dass die Düsen 3 einen Winkel zur Werkstücksfläche einnehmen, der im Bereich von 0°-50° liegt. Die Arbeitsstellung der Düse umschliesst diesen Bereich. Eine solche Schrägstellung der Düse 3 wird erforderlich, wenn in das Werkstück 2 ein konischer Schnitt durch die Strahlelektrode 1 erzeugt werden soll. Der Vorratsbehälter 4 der Figur 1 befindet sich in einer Schwenkvorrichtung, die nicht besonders dargestellt ist. Dieser Vorratsbehälter ist nur in die entsprechende Winkellage zu schwenken. Der Vorratsbehälter 4 der Figur 2 ist verdrehbar angeordnet. Allerdings muss hier die geometrische Zuordnung des Schlitzes 46 zum Schwimmkörper 42 des Mantels 41 geändert werden, so dass der Schlitz die Versorgung der Düse 3 mit Medium 20 in dem angegebenen Winkelbereich sicherstellt.

Wenn auch die Figuren 1 + 2 nur je eine Düse 3 in Arbeitsstellung zeigen, so können mehrere Düsen vorgesehen sein, deren Strahlelektroden 1 gemeinsam und gleichzeitig dasselbe Werkstück 2 schneiden.


## Patentansprüche

1. Verfahren zum elektroerosiven Schneiden von Werkstücken (2) mittels mindestens einer Elektrode (1), wobei Elektrode (1) und Werkstück (2) durch einen Arbeitsspalt (13) voneinander getrennt sind, und ein Erosionsgenerator (12) den Arbeitsstrom liefert, **dadurch gekennzeichnet,** dass die Elektrode (1) aus einem aus einer Düse (3) unter Druck austretenden und durch den Querschnitt der Düse (3) geformten Strahl eines Mediums (20) mit hoher elektrischer Leitfähigkeit gebildet ist, und das Medium (20) einen flüssigen, gelartigen, pastenartigen oder pulverförmigen Zustand oder eine Kombination der genannten Zustände aufweist.

2. Verfahren zum elektroerosiven Schneiden nach Patentanspruch 1, **dadurch gekennzeichnet,** dass die den Strahl (1) erzeugende Düse (3) in der Nähe der einen Fläche des Werkstücks (2) und eine den Strahl auffangende Auffangvorrichtung (5) in der Nähe der andern Fläche des Werkstücks angeordnet sind.

3. Verfahren zum elektroerosiven Schneiden nach Patentanspruch 1 oder 2, **dadurch gekennzeichnet,** dass das Mundstück der Düse (3) in einem kleinen einstellbaren Abstand zur einen Fläche des Werkstücks (2) angeordnet ist.

4. Verfahren zum elektroerosiven Schneiden nach Patentanspruch 1, **dadurch gekennzeichnet,** dass die Düse (3) dem aus dem Mundstück austretenden Strahl (1) einen vorbestimmten Querschnitt gibt, welcher beim Hindurchtreten des Strahls durch den Arbeitsspalt (13) unverändert bleibt.

5. Verfahren zum elektroerosiven Schneiden nach Patentanspruch 1 + 4, **dadurch gekennzeichnet,** dass mehrere Düsen (3) oberhalb der einen Fläche des Werkstücks (2) angeordnet sind, von denen mindestens eine in Arbeitsposition gefahren wird.

6. Verfahren zum elektroerosiven Schneiden nach Patentanspruch 5, **dadurch gekennzeichnet,** dass die Düsen (3) gleiche oder unterschiedliche Querschnitte bzw. Formen aufweisen.

7. Verfahren zum elektroerosiven Schneiden nach einem der Patentansprüche 1, 5 und 6, **dadurch gekennzeichnet,** dass mindestens eine Düse (3) an einem Druckbehälter (4) zur Aufnahme des Mediums (20) angeordnet ist.

8. Verfahren zum elektroerosiven Schneiden nach einem der vorhergehenden Patentansprüche, **dadurch gekennzeichnet,** dass die Düse (3) am Druckbehälter (4) in Arbeitsposition oder Ruheposition bringbar ist und der Austritt des Mediums (20) mittels einer Schliessvorrichtung (18, 19) gesteuert wird.

9. Verfahren zum elektroerosiven Schneiden nach einem der vorhergehenden Patentansprüche, **dadurch gekennzeichnet,** dass der Druckbehälter (4) zylinderförmig ausgebildet und verdrehbar ist, wobei die Schliessvorrichtung aus einem elastischen Mantel (41) mit einem Schlitz (46) besteht, welcher mit einem Schwimmer (42, 44) so verbunden ist, dass die in Arbeitsposition stehende Düse (3) über den Schlitz (46) mit dem Medium (20) im Druckbehälter (4) verbunden ist.

10. Verfahren zum elektroerosiven Schneiden nach einem der vorhergehenden Patentansprüche, **dadurch gekennzeichnet,** dass die elektrische Zuleitung (14) an der Düse (3) für den vom Erosionsgenerator (12) kommenden Arbeitsstrom grossflächig angeschlossen ist.

11. Verfahren zum elektroerosiven Schneiden nach Patentanspruch 2, **dadurch gekennzeichnet,** dass die Oeffnung der Auffangvorrichtung (5) in einem kleinen Abstand zur anderen Fläche des Werkstücks (2) angeordnet ist, und mindestens eine Umlenkfläche (6) oder mindestens ein Umlenkkanal, welche im Innern der Auffangvorrichtung angeordnet sind, den aus dem Arbeitsspalt (13) austretenden Strahl (1) zur Eliminierung der kinetischen Energie umlenkt.

12. Verfahren zum elektroerosiven Schneiden nach Patentanspruch 2 oder 11, **dadurch gekennzeichnet,** dass das in der Auffangvorrichtung (5) aufgefangene Medium (20) in einem Aufbereitungsgerät (8) für die Wiederverwendung gereinigt und mittels einer Pumpe (11) in den Druckbehälter (4) der Düse (3) gepumpt wird.

## Revendications

1. Procédé de coupe par électroérosion de pièces à usiner (2) au moyen d'au moins une électrode (1), l'électrode (1) et la pièce à usiner (2) étant séparées l'une de l'autre par une fente de travail (13) et un générateur d'érosion fournissant le courant de travail, caractérisé en ce que l'électrode (1) est formée par un jet d'un produit (20) de haute conductibilité électrique, sortant sous pression d'une buse (3) et formé par la section transversale de la buse (3), et en ce que le produit (20) se trouve dans un état liquide, de gel, pâteux ou pulvérulent ou sous la forme d'une combinaison de ces états.

2. Procédé de coupe par électroérosion selon la revendication 1, caractérisé en ce que la buse (3) produisant le jet (1) est placée à proximité d'une face de la pièce à usiner (2) et un dispositif de collecte (5), recueillant le jet, est disposé à proximité de l'autre face de la pièce à usiner.

3. Procédé de coupe par électroérosion selon la revendication 1 ou 2, caractérisé en ce que l'orifice de la buse (3) se trouve à une petite distance réglable d'une face de la pièce à usiner (2).

4. Procédé de coupe par électroérosion selon la revendication 1, caractérisé en ce que la buse (3) donne au jet (1) sortant de l'orifice, une section transversale prédéterminée qui reste inchangée lorsque le jet traverse la fente de travail (13).

5. Procédé de coupe par électroérosion selon les revendications 1 et 4, caractérisé en ce que plusieurs buses (3) sont disposées au-dessus d'une face de la pièce à usiner (2) et l'une au moins est déplacée dans une position de travail.

6. Procédé de coupe par électroérosion selon la revendication 5, caractérisé en ce que les buses (3) ont des sections transversales ou des formes identiques ou différentes.

7. Procédé de coupe par électroérosion selon l'une des revendications 1, 5 et 6, caractérisé en ce qu'une buse (3) au moins est placée sur un réservoir de pression (4) destiné à recueillir le produit (20).

8. Procédé de coupe par électroérosion selon l'une des revendications précédentes, caractérisé en ce que la buse (3) placée sur le réservoir de pression (4) peut être amenée en position de travail ou en position de repos et la sortie du fluide (20) est commandée au moyen d'un dispositif de fermeture (18, 19).

9. Procédé de coupe par électroérosion selon l'une des revendications précédentes, caractérisé en ce que le réservoir de pression (4) est cylindrique et tournant, le dispositif de fermeture étant constitué d'une enveloppe (41) élastique avec une fente (46) qui est reliée avec un flotteur (42, 44) de manière que la buse (3) en position de travail soit reliée au produit (20) contenu dans le réservoir de pression (4), par la fente (46).

10. Procédé de coupe par électroérosion selon l'une des revendications précédentes, caractérisé en ce que la ligne d'arrivée électrique (14) est raccordée sur une grande surface à la buse (3) pour le courant de travail provenant du générateur d'érosion (12).

11. Procédé de coupe par électroérosion selon la revendication 2, caractérisé en ce que l'ouverture du dispositif de collecte (5) est placée à une courte distance de l'autre face de la pièce à usiner (2) et en ce qu'au moins une surface de déviation (6) ou au moins un canal de déviation qui sont placés à l'intérieur du dispositif de collecte dévie le jet (1) provenant de la fente de travail (13), afin d'annuler l'énergie cinétique.

12. Procédé de coupe par électroérosion selon la revendication 2 ou 11, caractérisé en ce que le produit (20) recueilli dans le dispositif de collecte (5), est épuré dans un appareil de traitement (8) pour être réutilisé et est pompé dans le réservoir de pression (4) de la buse (3), au moyen d'une pompe (11).

## Claims

1. Electroerosive cutting of workpieces by means of at least one electrode, the electrode and the workpiece being separated from each other by a working gap and an erosion generator supplying the working current, **characterised** in that the electrode is constituted as a jet (1) of a medium (20) of high electric conductivity, said jet emerging from a nozzle (3) under pressure and being shaped by the cross-section of said nozzle the medium (20) being in at least one liquid, gel-like, pastelike or powderous state or in a combination of said states.

2. Electroerosive cutting according to claim 1, **characterized** in that the nozzle (3) generating the jet (1) is arranged in the vicinity of the one surface of the workpiece (2) and a basin (5) collecting the jet is arranged in the vicinity of the other surface of the workpiece.

3. Electroerosive cutting according to claim 1 or 2, **characterized** in that the mouthpiece of the nozzle (3) is arranged in a small adjustable distance to one surface of the workpiece (2).

4. Electroerosive cutting according to claim 1, **characterized** in that the nozzle (3) imparts a predetermined cross-section to the jet (1) emerging from the mouthpiece, said cross-section remaining unchanged during the passage of the jet through the working gap (13).

5. Electroerosive cutting according to claims 1 and 4, **characterized** in that a number of nozzles (3) is arranged above the one surface of the workpiece, at least one of said nozzle being movable into a working position.

6. Electroerosive cutting according to claim 5, **characterized** in that the nozzles (3) have the same or different cross-sections or shapes.

7. Electroerosive cutting according to one of claims 1, 5 and 6, **characterized** in that at least one nozzle (3) is arranged on a pressure vessel (4) for receiving the medium (20).

8. Electroerosive cutting according to one of the preceding claims, **characterized** in that the nozzle (3) on the pressure vessel (4) is movable into a working position or an inoperative position and that the outflow of the medium (20) is controlled by means of a sealing device (18, 19).

9. Electroerosive cutting according to one of the preceding claims, **characterized** in that the pressure vessel (4) is of cylindrical shape and is rotatable, the sealing device consisting of an elastic lining (41) with a slot (46), the lining being connected to a floating body (42, 44) in such a manner that the nozzle (3) in its working position is connected to the medium (20) in the pressure vessel (4) through the slot (46).

10. Electroerosive cutting according to one of the preceding claims, **characterized** in that the electric conduit (14) for the working current supplied by the erosion generator (12) is connected to the nozzle (3) over a great area.

11. Electroerosive cutting according to claim 2, **characterized** in that the aperture of the collecting basin (5) is arranged at a small distance to the other surface of the workpiece and that at least a deviation area (6) or at least a deviation channel disposed within the collecting basin (5) deviates the jet (1) emerging from the working gap (13) in order to eliminate its kinetic jet energy.

12. Electroerosive cutting according to claim 2 or 11, **characterized** in that the medium (20) collected in the collecting basin (5) is cleaned in a processing device (8) for re-use and is pumped by means of a pump (11) into the pressure vessel (4) of the nozzle.

FIG. 1

FIG. 2